# EUROPEAN PATENT APPLICATION

(11) **EP 3 144 930 A1**
(43) Date of publication of application: **22.03.2017**
(21) Application number: 16189096.7
(22) Date of filing: 16.09.2016
(51) Int. Cl.: G10L 15/08, G10L 15/07

(54) **APPARATUS AND METHOD FOR SPEECH RECOGNITION, AND APPARATUS AND METHOD FOR TRAINING TRANSFORMATION PARAMETER**

(30) Priority: 18.09.2015 KR 20150132626
(71) Applicant: Samsung Electronics Co., Ltd., Suwon-si, Gyeonggi-do 16677 (KR)
(72) Inventor: YOO, Sang Hyun, Seoul (KR); KIM, Jung Hoe, Gyeonggi-do (KR); PARK, Hyoung Min, Seoul (KR); CHOI, Hee Youl, Gyeonggi-do (KR); HONG, Seok Jin, Gyeonggi-do (KR)
(74) Representative: Grünecker Patent- und Rechtsanwälte PartG mbB

(57) **Abstract**

Provided are a method and an apparatus for speech recognition, and a method and an apparatus for training transformation parameter. A speech recognition apparatus includes an acoustic score calculator configured to use an acoustic model to calculate an acoustic score of a speech input, an acoustic score transformer configured to transform the calculated acoustic score into an acoustic score corresponding to standard pronunciation by using a transformation parameter, and a decoder configured to decode the transformed acoustic score to output a recognition result of the speech input.

## Description

### BACKGROUND

### 1. Field

The following description relates to an apparatus and a method for speech recognition.

### 2. Description of the Related Art

Speech recognition technologies use an acoustic model to calculate a phoneme probability table for a user's speech by using features extracted from a speech signal of the user. The phoneme probability table is converted into a final recognition result through a decoding process. However, because people have different pronunciations, even when an identical phase is uttered, different phoneme tables may be generated based on who is uttering the phrase. A slight difference in pronunciation may be corrected by a language model. However, a significant deviation from a standard pronunciation, such as that resulting from the use of a local dialect, may not be appropriately corrected by a language model, causing inconveniences to users having distinctive pronunciation features.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a speech recognition apparatus includes an acoustic score calculator configured to use an acoustic model to calculate an acoustic score of a speech input, an acoustic score transformer configured to transform the calculated acoustic score into an acoustic score corresponding to standard pronunciation by using a transformation parameter; and a decoder configured to decode the transformed acoustic score to output a recognition result of the speech input.

The general aspect of the apparatus may further include a language score calculator configured to use a language model to output a language score of the speech input, and the decoder may be configured to decode the calculated acoustic score based on the language score and output the recognition result.

The general aspect of the apparatus may further include a feedback collector configured to collect verification data regarding the recognition result based on a user feedback.

The general aspect of the apparatus may further include a trainer configured to re-train the transformation parameter based on the acoustic score calculated by the acoustic score calculator and the collected verification data, and update the transformation parameter based on the re-training.

The trainer may update the transformation parameter by transmitting the calculated acoustic score and the collected verification data to a training apparatus, and by receiving the re-trained transformation parameter from the training apparatus.

The acoustic score transformer may apply the transformation parameter as at least one of a matrix product algorithm, a neural network algorithm, or a linear regression algorithm to the calculated acoustic score.

The transformation parameter to be applied may be determined in advance based on at least one of a user identity, a group identity, an age, a geographic region, a dialect and a gender of a user.

In another general aspect, a speech recognition method involves using an acoustic model to calculate an acoustic score of a speech input, transforming the calculated acoustic score into an acoustic score for standard pronunciation by using a transformation parameter, and decoding the transformed acoustic score to output a recognition result of the speech input.

The general aspect of the method may further involve using a language model to output a language score of the speech input, and the decoding of the transformed acoustic score may involve decoding the calculated acoustic score based on the language score.

The general aspect of the method may further involve collecting verification data regarding the recognition result based on a user feedback.

The general aspect of the method may further involve re-training the transformation parameter based on the acoustic score calculated by the acoustic score calculator and the collected verification data, and updating the transformation parameter based on the re-training.

The general aspect of the method may further involve transmitting the calculated acoustic score and the collected verification data to a training apparatus, receiving the re-trained transformation parameter from the training apparatus, and updating the transformation parameter by using the received transformation parameter.

The calculating, the transforming and the decoding may be performed by one or more processors.

In another general aspect a non-transitory computer-readable medium stores instructions that, when executed by a process, causes a processor to perform the general aspect of the method described above.

In another general aspect, an apparatus for training a transformation parameter includes: a training data collector configured to collect, as training data, acoustic score data of actual speech for training, and verification data based on standard pronunciation that corresponds to the actual speech for training; a trainer configured to train the transformation parameter by using the training data; and a data transmitter configured to transmit the trained transformation parameter to a speech recognition apparatus.

The training data collector may be configured to classify the collected training data according to predetermined criteria; and the trainer may be configured to train the transformation parameter for each classified group to generate the transformation parameter for the each classified group.

The predetermined criteria may include at least one of a user identity, a group identity, an age, a geographic region, a dialect and a gender.

The training data collector may further collect, as training data, acoustic score data of a user speech and verification data based on a user feedback, from the speech recognition apparatus.

In another general aspect, a method of training a transformation parameter may involve collecting, as training data, acoustic score data of actual speech and verification data based on standard pronunciation that corresponds to the actual speech for training; training the transformation parameter by using the training data; and transmitting the trained transformation parameter to a speech recognition apparatus.

The collecting of the training data may involve classifying the collected training data according to predetermined criteria, and the training may involve training the transformation parameter for each classified group and generating the transformation parameter for each classified group.

The predetermined criteria may include at least one of a user identity, a group identity, an age, a geographic region, a dialect and a gender.

The collecting of the training data may involve further collecting, as training data, acoustic score data of a user speech and correct recognition data based on a user feedback, from the speech recognition apparatus.

In another general aspect, a speech recognition apparatus includes a processor configured to calculate a first acoustic score based on a speech input, convert the first acoustic score into a second acoustic score corresponding to standard pronunciation by using a transformation parameter, and decode the second acoustic score to recognize the speech input.

The processor may be configured to calculate the first acoustic score with an acoustic model based on standard pronunciation. The processor may be configured to apply the transformation parameter to the first acoustic score in generating the second acoustic score to account for a pronunciation feature of a user that deviates from the standard pronunciation.

The processor may be configured to use the transformation parameter to adjust for a pronunciation feature of a user that relates to at least one of a user identity, a group identity, an age, a geographic region, a dialect and a gender of the user.

In another general aspect, an electronic device includes a microphone configured to detect a signal corresponding to the speech input, and a general aspect of a speech recognition apparatus as described above.

Other features and aspects will be apparent from the following detailed description, the drawings, and the claims.

### BRIEF DESCRIPTION OF THE DRAWINGS

FIG. 1 is a diagram illustrating an example of a speech recognition apparatus.
FIG. 2 is a diagram illustrating another example of a speech recognition apparatus.
FIG. 3 is a block diagram illustrating yet another example of a speech recognition apparatus.
FIG. 4 is a flowchart illustrating an example of a speech recognition method.
FIG. 5 is a flowchart illustrating another example of a speech recognition method.
FIG. 6A is a flowchart illustrating another example of a speech recognition method.
FIG. 6B is a diagram illustrating an example of a process of updating a transformation parameter illustrated in FIG. 6A.
FIG. 7 is a block diagram illustrating another example of a transformation parameter training apparatus.
FIG. 8 is a flowchart illustrating an example of a transformation parameter training method.
FIG. 9 is a block diagram illustrating an example of an electronic device.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Hereinafter, examples of apparatuses and methods for speech recognition will be described in detail with reference to the accompanying drawings.

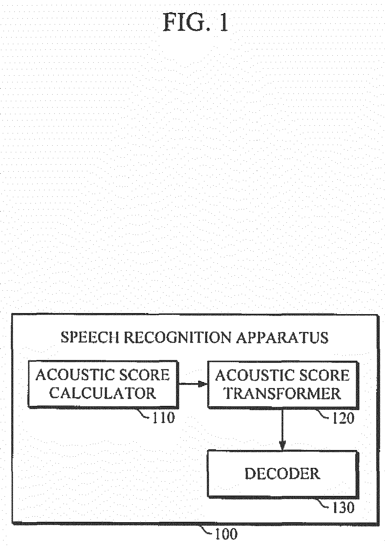

FIG. 1 is a block diagram illustrating an example of a speech recognition apparatus. According to one example, the speech recognition apparatus 100 may be manufactured as a software running on a processor or as a hardware chip for installation in an electronic device. However, the configuration of the speech recognition apparatus 100 is not limited thereto.

Referring to FIG. 1, the speech recognition apparatus 100 includes an acoustic score calculator 110, an acoustic score transformer 120, and a decoder 130.

In this example, the acoustic score calculator 110 calculates an acoustic score by providing speech input of a user to an acoustic model. Examples of the acoustic model include, but is not limited to, a Gaussian Mixture Model (GMM), a neural network-based acoustic model, Deep Neural Network (DNN) Bidirectional Recurrent Deep Neural Network (BRDNN), and the like.

Further, according to one example, the acoustic score calculator 110 calculates, as an acoustic score, probabilities of one predetermined linguistic unit among various basic linguistic units, such as phoneme, syllable, morpheme, phrase, word, sentence, and the like. Basic linguistic units are different for various languages. Thus, the predetermined linguistic unit may be selected in various manners for each language.

Generally, an acoustic model is trained with standard pronunciation speech signals, and the acoustic model generated based on such training is commonly applied to general speech recognition. Standard pronunciation may be the pronunciation being widely used as conventional without accents and/or the average pronunciation resulting from an averaging effect over large training data. Different users may pronounce an identical expression differently. Because acoustic models are generated based on standard pronunciation speech signals, the phoneme probabilities, i.e., acoustic scores, that are calculated by applying an acoustic model to an actual utterance from multiple users may differ for each user even when the multiple users are uttering the same word or phrase.

In an example in which speech recognition is performed for an utterance in English, the pronunciations of an identical word or sentence may differ from that of each other based on a user's country (e.g. Great Britain or United States), hometown (e.g. Alabama or Massachusetts), age, gender, and the like. For example, some users with Asian heritage may pronounce the letter "r" with a sound similar to the letter "I". For this reason, when an Asian user pronounces the word "rock", and an acoustic score of the word is calculated by inputting the user's speech to the acoustic model, the probability of "I" will be higher than the probability of "r", and a final recognition result may be "lock", rather than "rock".

Thus, in the event that an acoustic score that is calculated by an acoustic score calculator 110 is directly input to the decoder 130, the obtained speech recognition result may differ depending on user, there by resulting in an inaccurate speech recognition result. Further, in the event that speech of a user, who has pronunciation features that differ from standard pronunciation, is recognized with a speech recognition apparatus that uses only the common acoustic model, the user may continuously receive faulty speech recognition results, thereby reducing the reliability of the speech recognition for the user.

To this end, according to the example illustrated in FIG. 1, the acoustic score transformer 120 transforms an acoustic score that may have been calculated inaccurately due to users' distinctive pronunciation features, into an acoustic score corresponding to a speaker who speaks with standard pronunciation. For example, the acoustic score may be transformed by using a transformation parameter pre-generated based on individual users' pronunciation features. Further, the transformation parameter may be generated according to various criteria, such as a user's geographic region, age, gender, heritage and the like, and an algorithm by which the generated transformation parameter is to be applied to a speech input, may also be determined in advance according to the criteria.

Examples of algorithms that may be used to implement the transformation parameter include a matrix product algorithm, a neural network algorithm, a linear regression algorithm, and the like. An appropriate algorithm may be determined based on a computing capacity, such as a memory capacity, storage capacity, CPU performance, and the like of an electronic device having the speech recognition apparatus 100. Examples of electronic devices including a recognition apparatus 100 include, but is not limited to, a TV, a navigation, a vehicle electronic device, a smartphone, a table PC, a smart watch, a desktop computer, a laptop computer, a wearable device, and the like.

The decoder 130 decodes an acoustic score that has been transformed by a transformation parameter generated in consideration of a user's unique pronunciation features. Thus, the decoder 130 outputs its recognition result as though the user's actual speech were delivered with a standard pronunciation.

In this example, the transformation parameter is trained by using training data, classified according to any one criterion of, or a combination of two or more criteria of, a user identity, a group identity, a geographic region, an age, a gender of the user, and the like. Individual transformation parameters may be generated for each criterion. For example, a transformation parameter may be trained specifically for a user based on a user identity in applications such as a smart phone used by one user. Further, a user may belong to a group with certain pronunciation features. For instance, when speech recognition is performed in the English language for an Asian user, a transformation parameter that is trained by using the Asian region training data, among the training data classified according to various criteria, may be used. In this manner, when the Asian user pronounces the term "rock" with a heavy accent, resulting in the acoustic score calculator 110 calculating an acoustic score of the letter "I" to be higher than "r", the acoustic score transformer 120 may transform the acoustic score by using a transformation parameter optimized for the Asian user, so that the acoustic score of the letter "r" is higher than the letter "I". Thus, the decoder 130 outputs a final recognition result of "rock", instead of "lock", due to the transformation.

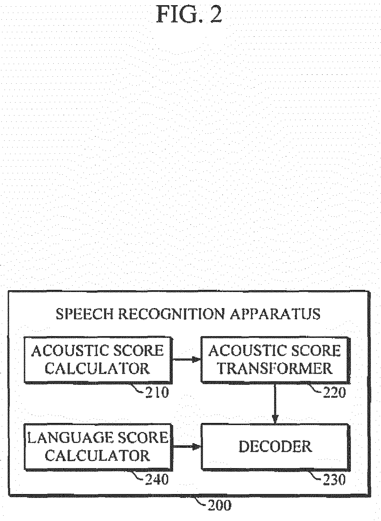

FIG. 2 is a diagram illustrating another example of a speech recognition apparatus.

Referring to FIG. 2, the speech recognition apparatus 200 includes an acoustic score calculator 210, an acoustic score transformer 220, a decoder 230, and a language score calculator 240.

As described above, the acoustic score calculator 210 calculates an acoustic score by providing an actual speech input from a user to an acoustic model, and the acoustic score transformer 220 transforms the calculated acoustic score into a standard pronunciation acoustic score by using a transformation parameter. The transformation parameter may be trained according to a user's age, gender, region, and the like, so that an acoustic score may be transformed to account for a user's unique pronunciation features.

The language score calculator 240 calculates a language score by using a language model. A language model may be an N-Gram language model or a neural network-based language model. For example, the language score calculator 250 may output, as a language score, a probability of the frequency of use of a specific word or sentence.

In response to the acoustic score calculator 210 calculating an acoustic score of an actual speech input from a user, the acoustic score transformer 220 transforms the acoustic score into an acoustic score of a person speaking with standard pronunciation. The decoder 230, then, accurately outputs a speech recognition result by decoding speech based on the transformed acoustic score and a language model score. In this manner, the decoder 230 decodes speech by further considering a language score in addition to the transformed acoustic score, thereby enabling accurate speech recognition.

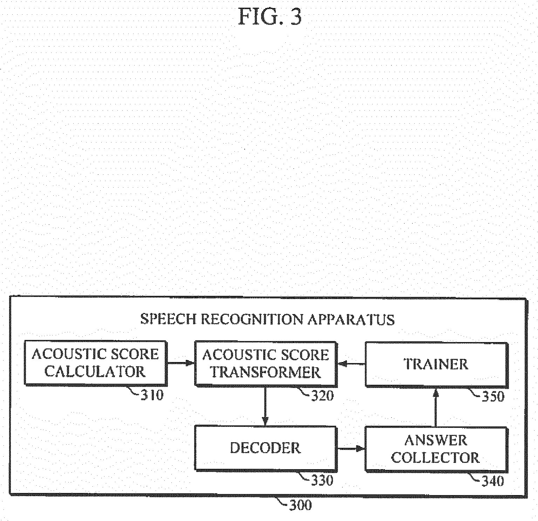

FIG. 3 is a block diagram illustrating another example of a speech recognition apparatus. In this example, the speech recognition apparatus 300 has a function that allows the speech recognition apparatus 300 to update a transformation parameter based on a user's feedback. The speech recognition apparatus 300 may generate and use a transformation parameter personalized for a user that uses an electronic device having the speech recognition apparatus 300. In an example in which a plurality of electronic devices each have a speech recognition apparatus 300, a plurality of transformation parameters that are personalized for each user may be generated.

Referring to FIG. 3, the speech recognition apparatus 300 further includes a feedback collector 340 and a trainer 350, in addition to an acoustic score calculator 310, an acoustic score transformer 320, and a decoder 330.

As described above, when a user inputs an actual speech, the acoustic score calculator 310 calculates an acoustic score by using an acoustic model, and the acoustic score transformer 320 transforms the calculated acoustic score into a standard-speech acoustic score by using a transformation parameter. Further, the decoder 330 outputs a recognition result of a user's actual speech by using the transformed acoustic score.

The feedback collector 340 receives feedback on a speech recognition result from a user, and collects verification data of the recognition result corresponding to an actual speech of a user, based on the received feedback. The verification data may correspond to a word, a phrase or a sentence that is verified by the user to have been uttered in the speech input decoded by the decoder 330. In some cases, the verification data will merely confirm the recognition result. The feedback collector 340 may provide an interface that interacts with a user in various manners to enable the user to readily input feedback.

For example, the feedback collector 340 may output in voice a query requiring a user response through a speaker of an electronic device including the speech recognition apparatus 300. In the event that the word "rock" is recognized as "lock", an auditory request such as "Is the input word 'lock'?" may be output, and a user may input a feedback response with a "Yes" or "No", or a user may input a feedback response with a "No, it is 'rock.'"

In another example, the feedback collector 340 displays a text input box on a screen along with a request, "please input a correct word/phrase," so that a user may directly input an answer.

In yet another example, the feedback collector 340 determines a plurality of recognition candidates based on a speech recognition result, and presents a list of determined candidates on the screen. For example, the feedback collector 340 may present "rock" and "lock" as recognition candidates to a user. When a user selects either one, for example, "rock", the feedback collector 340 may collect "rock" as a user correction for the speech recognition result. As described above, after a speech recognition result is output, the feedback collector 340 may collect user responses by interacting with a user in various manners. However, the configuration of the feedback collector 340 is not limited to the above examples.

The feedback collector 340 may further perform an operation of extracting a verification data from a user's feedback. For example, when a user inputs a phrase or sentence that includes a verified recognition result from the user, the feedback collector 340 may extract the verified recognition result by analyzing the phrase or sentence, for example, by parsing or Named Entity Recognition (NER) of the phrase or sentence. In the example in which a user inputs "No, the correct word is rock", the feedback collector 340 may extract the correct recognition result, "rock," by using various analysis methods.

The trainer 350 updates an existing transformation parameter by using the collected verification data for a speech recognition result.

According to one example, the trainer 350 includes a function to train a transformation parameter. In this example, the trainer 350 may re-train a transformation parameter based on the acoustic score of a user's speech and the user verification collected by the feedback collector 340. By re-training a transformation parameter, the trainer 350 may update an existing transformation parameter, and may maintain a transformation parameter to be optimized for the user.

In another example, the trainer 350 updates an existing parameter by receiving a transformation parameter and by replacing the existing parameter with the received transformation parameter. The received transformation parameter may be trained by an external transformation parameter training apparatus that is connected through a wired or wireless network. In this example, by replacing all of the existing transformation parameters with the received transformation parameter, the trainer 350 may update a transformation parameter. Alternatively, the trainer 350 may update an existing transformation parameter by comparing the received transformation parameter with an existing transformation parameter and by updating only different portions. Further, the trainer 350 may update an existing transformation parameter by receiving, from a transformation parameter training apparatus, only different data portions from the existing transformation parameter, and by using the received data to update the existing transformation parameter.

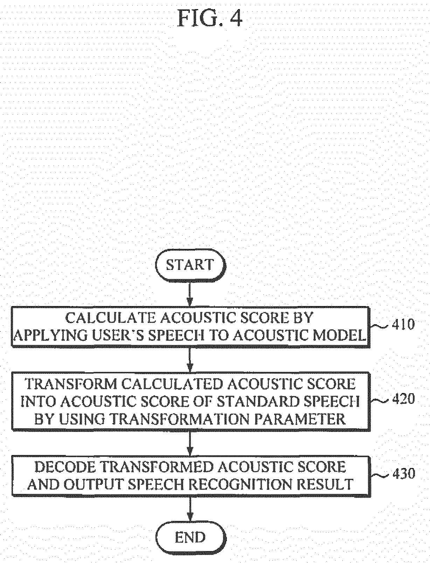

FIG. 4 is a flowchart illustrating an example of a speech recognition method. The example of the speech recognition method illustrated in FIG. 4 may be performed by a speech recognition apparatus 100 illustrated in FIG. 1.

Referring to FIG. 4, a speech recognition apparatus 100 calculates an acoustic score by providing a user's speech to an acoustic model in 410. In this example, the acoustic model may be based on a Gaussian Mixture Model (GMM), a neural network-based acoustic model, a Deep Neural Network (DNN) Bidirectional Recurrent Deep Neural Network (BRDNN), or the like; however, the configuration of the acoustic model is not limited to these examples. Further, the acoustic score may correspond to a probability of a linguistic unit being the correct recognition result. The linguistic unit may be one selected among basic linguistic units, such as phoneme, syllable, morpheme, phrase, word, sentence, and the like.

After the acoustic score is calculated, the speech recognition apparatus 100 transforms the calculated acoustic score into an acoustic score corresponding to standard pronunciation by using a transformation parameter in 420. According to one example, the speech recognition apparatus 100 includes in advance an appropriate transformation parameter based on a user's gender, age, region, and the like. Further, among various algorithms such as, for example, a matrix product algorithm, a neural network algorithm, a linear regression algorithm and the like, the algorithm by which the transformation parameter is to be applied to the acoustic score may correspond to an algorithm used by a training model to train the transformation parameter.

Subsequently, the speech recognition apparatus 100 decodes the transformed acoustic score and outputs a speech recognition result in 430. According to one example, the speech recognition result may be output in a text format. In yet another example, the speech recognition result may be used as a command for operating a TV, a navigator and the like.

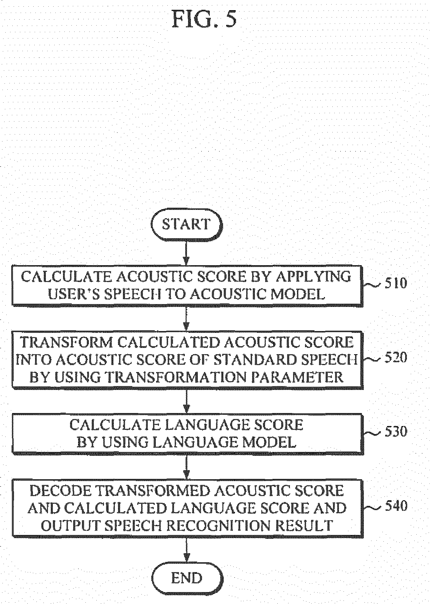

FIG. 5 is a flowchart illustrating another example of a speech recognition method. FIG. 5 is an example of a speech recognition method performed by the speech recognition apparatus 200 illustrated in FIG. 2.

The speech recognition apparatus 200 calculates an acoustic score by providing a user's speech to an acoustic model in 510.

Then, the speech recognition apparatus 200 transforms the calculated acoustic score into an acoustic score corresponding to standard pronunciation by using a transformation parameter in 520.

Subsequently, the speech recognition apparatus 200 calculates a language score by using a language model in 530. The language model may be an N-Gram language model, or a neural network-based language model.

Next, the speech recognition apparatus 200 decodes the transformed acoustic score and the calculated language score, and outputs a speech recognition result in 540.

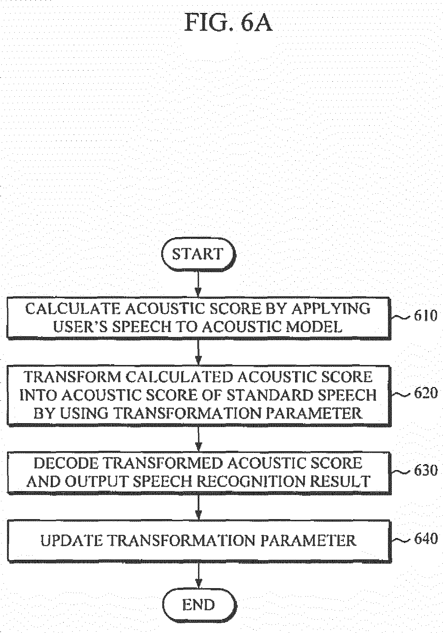

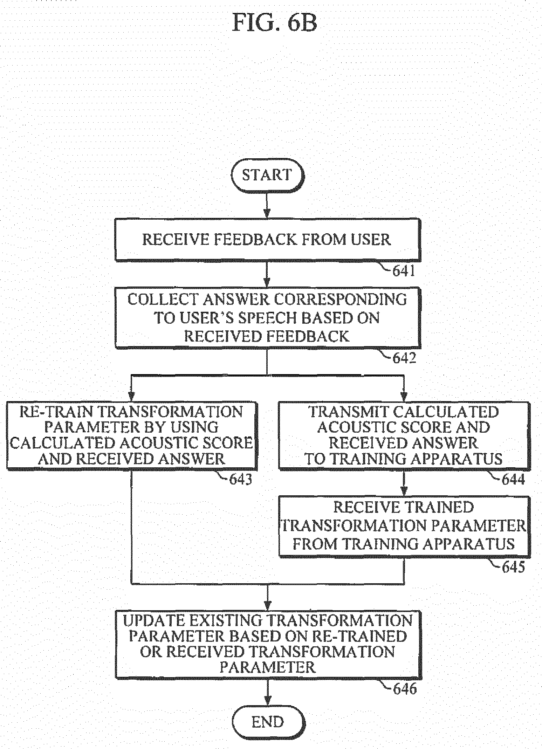

FIG. 6A is a flowchart illustrating another example of a speech recognition method. FIG. 6B is a diagram illustrating an example of a process of updating a transformation parameter in 640 illustrated in FIG. 6A. FIGS. 6A and 6B illustrate an example of a speech recognition method that may be performed by the speech recognition apparatus 300 illustrated in FIG. 3.

Referring to FIG. 6A, the speech recognition apparatus 300 calculates an acoustic score by applying a user's speech to an acoustic model in 610.

Then, the speech recognition apparatus 300 transforms the calculated acoustic score into an acoustic score of standard speech by using a transformation parameter in 620.

Subsequently, the speech recognition apparatus 300 decodes the transformed acoustic score, and outputs a speech recognition result in 630, in which the speech recognition result may be output in a text format.

Next, the speech recognition apparatus 300 updates a transformation parameter based on a user's feedback in 640.

Referring to FIG. 6B, the updating of the transformation parameter in 640 will be further described. The speech recognition apparatus 300 receives feedback on a speech recognition result from a user in 641. For example, speech recognition apparatus 300 may interact with the user in various manners to receive the user's feedback.

Next, based on the feedback received from the user, the speech recognition apparatus 300 collects verification data corresponding to a user verified recognition of a words, a phrase, a sentence or the like that has been uttered by the user in the user's actual speech in 642. To extract the verification data from the user feedback, the speech recognition apparatus 300 may analyze the received feedback.

Subsequently, the speech recognition apparatus 300 re-trains a transformation parameter by using the calculated acoustic score and the received verification data in 643. Alternatively, the speech recognition apparatus 300 may transmit the acoustic score calculated in 610 and the received verification data to a transformation parameter training apparatus in 644. In this case, the speech recognition apparatus 300 may receive an updated transformation parameter after the transformation parameter training apparatus re-trains a transformation parameter, in 645.

Next, the speech recognition apparatus 300 updates an existing transformation parameter in 646 based on the re-training in 643 or by using the transformation parameter received in 645 from the transformation parameter training apparatus. In this case, the speech recognition apparatus 300 may replace the existing parameter with the transformation parameter re-trained in 643 or with the transformation parameter received in 645 from the transformation parameter training apparatus, or may update only changed portions of the existing transformation parameter.

Hereinafter, examples of apparatuses and methods for training a transformation parameter for speech recognition will be described with references to accompanying drawings.

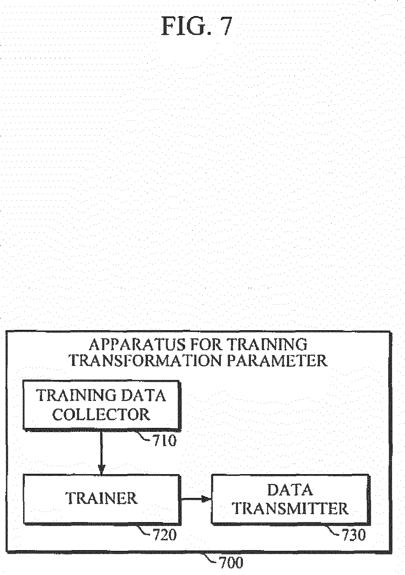

FIG. 7 is a block diagram illustrating another example of an apparatus for training a transformation parameter. The transformation parameter training apparatus 700 may be mounted in a server, but is not limited thereto, and may be mounted in a mobile terminal, such as a desktop computer, a laptop computer, a smartphone, and the like, depending on computing performance.

Referring to FIG. 7, the transformation parameter training apparatus 700 includes a training data collector 710, a trainer 720, and a data transmitter 730.

The training data collector 710 collects, as training data, acoustic score data of actual speech for training and verification data of standard pronunciation that corresponds to the actual speech for training.

In this example, the training data collector 710 collects standard pronunciation data, such as actual speech data including audio recordings of multiple user's utterances of specific words, phrases or the like, and applies the collected standard pronunciation data to an acoustic model to acquire acoustic score data. In this case, pronunciation features may be different based on gender and age groups, or based on dialects and countries. Thus, the actual speech data may be collected according to various criteria, such as a user's age, gender, region, and the like. The criteria are not limited to these examples, and may be defined in various manners based on users' distinctive pronunciation features.

In another example, the training data collector 710 may receive a user's actual speech and verification data regarding the actual speech from a speech recognition apparatus. In this example, the speech recognition apparatus presents a recognition result of a user's actual speech to a user, receives feedback on the recognition result from the user, acquires verification data based on the feedback, and transmits the verification data to the training data collector 710.

The training data collector 710 may group the collected training data according to criteria including a user's age, gender, region, and the like.

The trainer 720 trains a transformation parameter by using the collected training data. For example, the trainer 720 may train a transformation parameter by inputting acoustic score data of a user's actual speech to a training model, and mapping verification data based on standard pronunciation as a target of the training model. The training model may be, for example, a neural network-based training model, but is not limited thereto.

The trainer 720 trains the training data, classified according to criteria, for each group, and may generate a transformation parameter for each group.

The data transmitter 730 transmits the transformation parameter, generated by training, to a speech recognition apparatus. Upon receiving a request for a transformation parameter from the speech recognition apparatus, the data transmitter 730 acquires information, which includes age, region, gender, and the like, of a user of the speech recognition apparatus, from the request for the transformation parameter, and based on the acquired information, the data transmitter 730 determines a transformation parameter that is appropriate for the user, and provides the determined transformation parameter to the user.

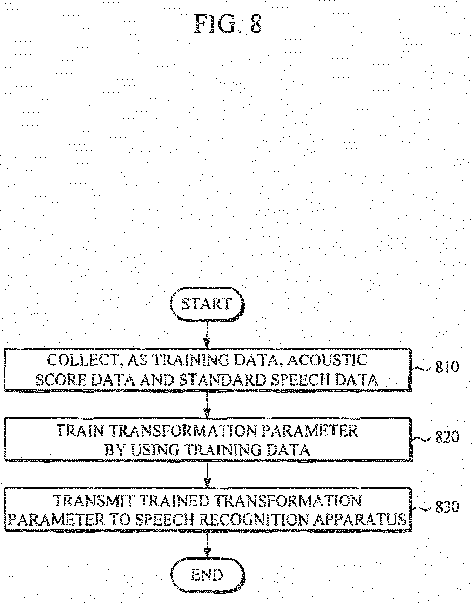

FIG. 8 is a flowchart illustrating an example of a method of training a transformation parameter. FIG. 8 may be an example of a transformation parameter training method that is performed by a transformation parameter training apparatus illustrated in FIG. 7.

Referring to FIG. 8, a transformation parameter training apparatus 700 collects, as training data, acoustic score data of actual speech for training and verification data based on standard pronunciation that corresponds to the actual speech for training in 810. For example, the transformation parameter training apparatus 700 may acquire acoustic score data by collecting users' actual speech data of specific standard speech, and by applying the collected actual speech data to an acoustic model. Further, the transformation parameter training apparatus 700 may receive a user's actual speech and verification data regarding the actual speech.

Then, the apparatus 700 for training a transformation parameter trains a transformation parameter by using training data in 820. According to one example, the transformation parameter training apparatus 700 groups the training data according to various criteria including a user's age, gender, region, and the like, and generates a transformation parameter for each group by training a transformation parameter for each group. In this case, the training may be performed by using, as an input of an acoustic model, the acoustic score data of a user's actual speech included in the training data, and by using, as a target of an acoustic model, the verified recognition data corresponding to standard pronunciation.

Then, the transformation parameter training apparatus 700 transmits the transformation parameter to a speech recognition apparatus in 830. Upon receiving a request for a transformation parameter from the speech recognition apparatus, the data transmitter 730 acquires information, which includes age, region, gender, and the like, and the other data that may be used to identify pronunciation features of a user, from the request for the transformation parameter. Based on the acquired information, the transformation parameter training apparatus 700 determines a transformation parameter to be provided to the user.

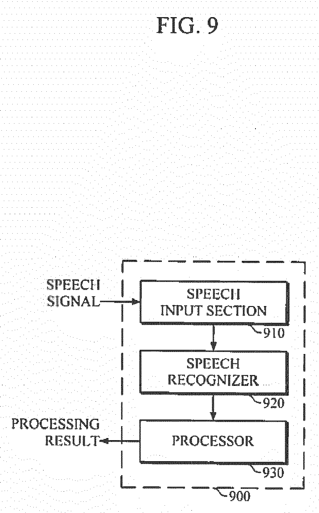

FIG. 9 is a diagram illustrating an example of an electronic device. FIG. 9 may be an example of an electronic device having the speech recognition apparatus 100 illustrated in FIG. 1. The electronic device 900 may be a TV set, a set-top box, a desktop computer, a laptop computer, a translation device, a smartphone, a table PC, a smart watch, a wearable device, an electronic control device of a vehicle, and the like, and may process various demands of a user by using a pre-stored speech recognition system. However, the electronic device 900 is not limited thereto, and may include any the electronic devices that may be used in the speech recognition field.

Referring to FIG. 9, the electronic device 900 includes a speech inputter 910, a speech recognizer 920, and a processor 930.

According to one example, the speech inputter 910 receives a user's speech signal that is input through a microphone of the electronic device 900 or the like. The user's speech signal may correspond to sentences to be translated into another language or commands for controlling a TV set, driving a vehicle, executing or controlling applications installed in the electronic device 900, browsing a website, or the like.

The speech inputter 910 performs a preprocessing process, during which an analog speech signal input by a user is converted into a digital signal. According to one example, the signal may be divided into a plurality of audio frames, the audio frames may be transmitted to the speech recognizer 920.

The speech recognizer 920 calculates an acoustic score by inputting the input audio frames to an acoustic model, and applies the calculated acoustic score to a transformation parameter that is appropriate for a user, so as to transform the calculated acoustic score to an acoustic score of standard speech by considering the user's pronunciation features. Further, the speech recognizer 920 may output a speech recognition result in a text format by decoding the transformed acoustic score. In the example in which there is a language model, the speech recognizer 920 may output a speech recognition result by further calculating a language score and decoding the language score.

The processor 930 may perform an operation in response to the final recognition result output by the speech recognizer 920. For example, the processor 930 may output the recognition result of speech input by a user in voice through a speaker and the like, or may provide the recognition result in a text format on a display. Further, the processor 930 may perform operations to process commands (e.g., power on/off, volume control, running an application, control of Internet of Things (IoT), etc.) which may be operated by the electronic device 900. Further, the processor 930 may translate the final recognition result output in a text format into another language by applying various translation techniques to the speech recognition result, and may output the translated result in voice or in a text format. However, the processor 930 is not limited thereto, and may be used in other various applications.

The acoustic score calculator, acoustic score transformer, decoder, language score calculator, trainer, feedback collector, training data collector, data transmitter, speech inputter, preprocessor, speech recognizer, processor, speech recognition apparatus, transformation parameter training apparatus, electronic device, and other components, devices and apparatuses illustrated in FIG. 1-3, 7 and 9 that perform the operations described in this application are implemented by hardware components configured to perform the operations described in this application that are performed by the hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 3-6B and 8 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs. CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims.

## Claims

1. A speech recognition apparatus comprising:
an acoustic score calculator configured to use an acoustic model to calculate an acoustic score of a speech input;
an acoustic score transformer configured to transform the calculated acoustic score into an acoustic score corresponding to standard pronunciation by using a transformation parameter; and
a decoder configured to decode the transformed acoustic score to output a recognition result of the speech input.

2. The apparatus of claim 1, further comprising a language score calculator configured to use a language model to output a language score of the speech input,
wherein the decoder is configured to decode the calculated acoustic score based on the language score and output the recognition result.

3. The apparatus of claim 1, further comprising a feedback collector configured to collect verification data regarding the recognition result based on a user feedback.

4. The apparatus of claim 3, further comprising a trainer configured to re-train the transformation parameter based on the acoustic score calculated by the acoustic score calculator and the collected verification data, and update the transformation parameter based on the re-training, or
wherein the trainer updates the transformation parameter by transmitting the calculated acoustic score and the collected verification data to a training apparatus, and by receiving the re-trained transformation parameter from the training apparatus.

5. The apparatus of claim 1, wherein the acoustic score transformer applies the transformation parameter as at least one of a matrix product algorithm, a neural network algorithm, or a linear regression algorithm to the calculated acoustic score,
wherein the transformation parameter to be applied is determined in advance based on at least one of a user identity, a group identity, an age, a geographic region, a dialect and a gender of a user.

6. A method of training a transformation parameter, the method comprising:
collecting, as training data, acoustic score data of actual speech and verification data based on standard pronunciation that corresponds to the actual speech for training;
training the transformation parameter by using the training data; and
transmitting the trained transformation parameter to a speech recognition apparatus.

7. The method of claim 6, wherein:
the collecting of the training data comprises classifying the collected training data according to predetermined criteria; and
the training comprises training the transformation parameter for each classified group, and generating the transformation parameter for each classified group,
wherein the predetermined criteria comprises at least one of a user identity, a group identity, an age, a geographic region, a dialect and a gender.

8. The method of claim 6, wherein the collecting of the training data comprises further collecting, as training data, acoustic score data of a user speech and correct recognition data based on a user feedback, from the speech recognition apparatus.

9. A non-transitory computer-readable medium storing instructions that, when executed by a process, causes a processor to perform a speech recognition method comprising:
using an acoustic model to calculate an acoustic score of a speech input;
transforming the calculated acoustic score into an acoustic score for standard pronunciation by using a transformation parameter; and
decoding the transformed acoustic score to output a recognition result of the speech input.

10. The computer-readable medium of claim 9, further comprising using a language model to output a language score of the speech input,
wherein the decoding of the transformed acoustic score comprises decoding the calculated acoustic score based on the language score.

11. The computer-readable medium of claim 9, further comprising collecting verification data regarding the recognition result based on a user feedback,
further comprising:
re-training the transformation parameter based on the acoustic score calculated by the acoustic score calculator and the collected verification data; and updating the transformation parameter based on the re-training, or
further comprising:
transmitting the calculated acoustic score and the collected verification data to a training apparatus; receiving the re-trained transformation parameter from the training apparatus; and updating the transformation parameter by using the received transformation parameter.

12. The computer-readable medium of claim 9, wherein the calculating, the transforming and the decoding are performed by one or more processors.

13. An electronic device comprising:
a microphone configured to detect a signal corresponding to the speech input; and
a speech recognition apparatus comprising a processor configured to:
calculate a first acoustic score based on a speech input;
convert the first acoustic score into a second acoustic score corresponding to standard pronunciation by using a transformation parameter; and
decode the second acoustic score to recognize the speech input.

14. The device of claim 13, wherein the processor is configured to calculate the first acoustic score with an acoustic model based on standard pronunciation, and
the processor is configured to apply the transformation parameter to the first acoustic score in generating the second acoustic score to account for a pronunciation feature of a user that deviates from the standard pronunciation.

15. The device of claim 13, wherein the processor is configured to use the transformation parameter to adjust for a pronunciation feature of a user that relates to at least one of a user identity, a group identity, an age, a geographic region, a dialect and a gender of the user.
